# FASCICULE DE BREVET EUROPEEN

(11) **EP 3 365 898 B1**
(45) Date de publication et mention de la délivrance du brevet: **13.11.2019**
(21) Numéro de dépôt: 16790535.5
(22) Date de dépôt: 18.10.2016
(51) Int. Cl.: G21C 19/46, G21F 9/06, C01G 56/00, G21F 9/12

(54) **UTILISATION D'ACIDES HYDROXYIMINOALCANOÏQUES COMME AGENTS ANTI-NITREUX DANS DES OPÉRATIONS DE DÉSEXTRACTION RÉDUCTRICE DU PLUTONIUM**
VERWENDUNG VON HYDROXYIMINOALKANSÄUREN ALS ANTI-NITRAT-AGENZIEN IN REDUKTIVEN RÜCKEXTRAKTIONSPROZESSEN FÜR PLUTONIUM
USE OF HYDROXYIMINOALCANI ACID AS ANTI-NITRIC AGENTS IN REDUCTIVE REEXTRACTION PROCESSES FOR PLUTONIUM

(30) Priorité: 21.10.2015 FR 1560047
(43) Date de publication de la demande: 29.08.2018
(73) Titulaire: Commissariat à l'Energie Atomique et aux Energies Alternatives, 75015 Paris (FR); Orano Cycle, 92400 Courbevoie (FR)
(72) Inventeur: HERES, Xavier, 30400 Villeneuve-Les-Avignon (FR); BERNIER, Gilles, 84000 Avignon (FR); DINH, Binh, 30130 Pont-Saint-Esprit (FR); POCHON, Patrick, 30126 Saint-Laurent-des-Arbres (FR); SANS, Danièle, 30130 Pont-Saint-Esprit (FR); ZEKRI, Elisabeth, 91400 Orsay (FR)
(74) Mandataire: Brevalex
(86) Numéro de dépôt international: PCT/EP2016/074990
(87) Numéro de publication internationale: WO 2017/067935

(56) Documents cités:
- WO-A1-2008/148863
- US-A1- 2014 072 485

## Description

### DOMAINE TECHNIQUE

L'invention se rapporte au domaine du traitement de combustibles nucléaires usés.

Plus spécifiquement, l'invention se rapporte à l'utilisation d'acides hydroxyiminoalcanoïques en tant qu'agents anti-nitreux dans des opérations de désextraction réductrice du plutonium.

L'invention est susceptible de s'appliquer à tous les procédés de traitement de combustibles nucléaires usés qui comprennent une ou plusieurs opérations de désextraction réductrice du plutonium.

De telles opérations sont notamment présentes dans le procédé PUREX tel qu'il est mis en œuvre dans les usines modernes de traitement de combustibles nucléaires usés (c'est-à-dire les usines UP3 et UP2-800 de La Hague en France et l'usine de Rokkasho au Japon), pour, d'une part, réaliser l'étape de partition U/Pu du premier cycle de décontamination de ce procédé et, d'autre part, parfaire la décontamination du plutonium en produits de fission dans le cycle de purification du plutonium, classiquement appelé « deuxième cycle plutonium », qui fait suite à ce premier cycle de décontamination.

Elles sont également présentes dans un certain nombre de procédés dérivés de ce procédé PUREX comme, par exemple, celui décrit dans la demande internationale PCT WO 2006/072729 **[1],** connu sous le nom de procédé COEX ou bien celui décrit dans la demande internationale PCT WO 2011/000844 **[2].**

### ÉTAT DE LA TECHNIQUE ANTÉRIEURE

Les opérations de désextraction réductrice du plutonium, qui sont mises en œuvre dans les procédés précités de traitement de combustibles nucléaires usés, consistent à faire passer le plutonium d'une phase organique (ou phase solvant), dans laquelle il se trouve au degré d'oxydation IV, dans une phase aqueuse en le réduisant au degré d'oxydation III, état dans lequel son affinité pour la phase organique est très faible.

La réduction du plutonium(IV) en plutonium(III) est induite par un agent réducteur que l'on ajoute à la phase aqueuse servant à la désextraction et que l'on stabilise par un agent anti-nitreux.

Dans le cas, par exemple, du premier cycle de décontamination du procédé PUREX tel qu'il est mis en œuvre dans les usines modernes de traitement de combustibles usés (qui sera appelé plus simplement « procédé PUREX » dans ce qui suit), l'agent réducteur utilisé pour désextraire le plutonium au cours de l'étape de partition U/Pu est l'uranium(IV) (ou nitrate uraneux), tandis que l'agent anti-nitreux est le nitrate d'hydrazinium, encore appelé hydrazine.

Les principales réactions chimiques à considérer sont :
- la réduction du plutonium(IV) en plutonium(III) par l'uranium(IV) (réaction fonctionnelle) :

   U⁴⁺ + 2Pu⁴⁺ + 2H₂O → UO₂²⁺ + 2Pu³⁺ + 4H⁺
- la réoxydation du plutonium(III) en plutonium(IV) (réaction parasite) :

   Pu³⁺ + HNO₂ + 1,5H⁺ + 0,5NO₃⁻ → Pu⁴⁺ + 0,5H₂O +1,5HNO₂
- l'oxydation de l'uranium(IV) en uranium(VI) par l'acide nitreux (réaction parasite) :

   U⁴⁺ + 2HNO₂ → UO²⁺ + 2NO + 2H⁺
- la destruction de l'acide nitreux en acide azothydrique par l'hydrazine (réaction utile) :

   N₂H₅NO₃ + HNO₂ → N₃H + HNO₃ + 2H₂O.

Les deux premières réactions ont lieu dans les phases aqueuse et organique alors que la réaction de destruction de l'acide nitreux par l'hydrazine n'a lieu qu'en phase aqueuse en raison de l'inextractabilité de l'hydrazine par la phase organique, cette dernière étant composée de phosphate de tri-*n*-butyle (ou TBP) à 30% (v/v) dans du tétrapropylène hydrogéné (ou TPH).

La présence de plutonium(III) dans la phase organique, même en faible quantité, catalyse l'oxydation de l'uranium(IV) par le biais des deux premières réactions et génère de ce fait de l'acide nitreux.

On a pu constater, lors d'études expérimentales menées dans des extracteurs centrifuges de laboratoire que, même avec de faibles temps de séjour en extracteur (de l'ordre de quelques secondes), la consommation par oxydation de l'uranium(IV) est très importante. Cette oxydation de l'uranium(IV) se développe essentiellement dans la phase organique, l'hydrazine n'étant présente qu'en phase aqueuse. Aussi, les schémas de fonctionnement des opérations de désextraction réductrice du plutonium prévoient-ils un large excès d'agent réducteur.

L'acide azothydrique formé par la réaction de destruction de l'acide nitreux par l'hydrazine réagit à son tour avec l'acide nitreux selon la réaction :

HN₃ + HNI₂ → N₂ + N₂O + H₂O.

La cinétique de cette réaction est cependant beaucoup plus lente que la réaction de destruction de l'acide nitreux par l'hydrazine de sorte que l'acide azothydrique se retrouve dans les phases aqueuse et organique effluentes de l'étape de partition U/Pu.

Ainsi, le fait que l'hydrazine ne soit pas extractible par la phase organique et n'agisse par conséquent qu'en phase aqueuse conduit à une consommation importante de réactifs et à la production d'espèces chimiques contraignantes pour l'exploitation industrielle du procédé.

Pour résoudre ce problème, il a été proposé, dans la demande internationale PCT WO 2008/148863 **[3],** d'utiliser un système anti-nitreux biphasique associant la butanal oxime, aussi appelée oxime de butyraldéhyde ou butyraldoxime, à l'hydrazine, la butanal oxime permettant, en effet, de stabiliser la phase organique pendant que l'hydrazine stabilise la phase aqueuse.

Si l'utilisation de la butanal oxime, en association avec l'hydrazine, présente un certain nombre d'avantages, notamment en ce qu'elle permet de réduire notablement les quantités de nitrate uraneux et d'hydrazine nécessaires à la réalisation d'une désextraction réductrice du plutonium et d'amoindrir ainsi les inconvénients liés à la non extraction de l'hydrazine en phase organique, elle n'est toutefois pas totalement satisfaisante du fait :
- de l'extraction relativement faible de la butanal oxime par la phase organique, ce qui oblige à introduire cette oxime en grande quantité dans l'extracteur dans lequel se déroule la désextraction réductrice du plutonium si l'on veut obtenir une concentration efficace de butanal oxime en phase organique ; en particulier, dans l'étape de partition U/Pu, l'extraction de la butanal oxime par la phase organique est fortement diminuée par la saturation de cette phase en actinides, ce qui rend *in fine* l'utilisation de cette oxime peu adaptée à la réalisation de cette étape de partition ;
- du maintien de l'utilisation d'hydrazine en phase aqueuse ; en effet, en dépit du fait que l'hydrazine soit un agent anti-nitreux des plus efficaces en phase aqueuse, son utilisation est contraignante, non seulement en raison des problèmes précédemment évoqués, liés à la formation d'acide azothydrique, mais également en raison de sa toxicité ; en effet, l'hydrazine fait partie de la liste des substances CMR, c'est-à-dire les substances qui sont considérées par le règlement (CE) 1907/2006 sur l'enregistrement, l'évaluation, l'autorisation et les restrictions des produits chimiques (règlement REACH) comme potentiellement ou de manière avérée cancérigènes, mutagènes et/ou toxiques pour la reproduction, et est susceptible d'être inscrite à plus ou moins long terme à l'annexe XIV de ce règlement, auquel cas sa mise sur le marché et son utilisation industrielle seront interdites sauf dérogation spécifique de l'Agence européenne des produits chimiques (ECHA).

De plus, une réaction de la butanal oxime avec l'hydrazine, conduisant à la formation d'une hydrazone, a été observée. Or, cette réaction diminue les performances de la butanal oxime et conduit à une surconsommation de ces deux réactifs.

Compte tenu de ce qui précède, les Inventeurs se sont donc fixé pour but de trouver des composés ayant un haut pouvoir anti-nitreux mais dont l'utilisation soit exempte des inconvénients présentés par l'utilisation d'hydrazine telle qu'actuellement mise en œuvre dans le procédé PUREX ou par l'utilisation d'un système biphasique butanal oxime/hydrazine telle que proposée dans la référence [3].

Plus spécifiquement, ils se sont fixé pour but que ces composés soient plus extractibles par une phase organique, notamment du type de celle qui est utilisée dans le procédé PUREX, que ne l'est l'hydrazine (dans les mêmes conditions de température et de pression), y compris lorsque cette phase organique est saturée en actinides, de sorte à pouvoir (1) réduire les quantités de ces composés nécessaires à la réalisation d'une désextraction réductrice du plutonium et (2) les utiliser aussi bien pour désextraire le plutonium dans l'étape de partition U/Pu du premier cycle de décontamination du procédé PUREX que pour désextraire le plutonium dans le deuxième cycle plutonium de ce procédé.

Ils se sont de plus fixé pour but que ces composés permettent de s'affranchir totalement de l'utilisation d'hydrazine.

### EXPOSÉ DE L'INVENTION

Ces buts et d'autres encore sont atteints par l'invention qui propose d'utiliser au moins un acide hydroxyiminoalcanoïque comprenant au moins 4 atomes de carbone, en tant qu'agent anti-nitreux dans une opération de désextraction réductrice du plutonium.

On rappelle que les acides hydroxyiminoalcanoïques sont des composés qui répondent à la formule générale : O=C(OH)-(R)-CH=N-OH dans laquelle R représente un groupe alkylène comprenant au moins un atome de carbone, ce groupe pouvant être linéaire ou ramifié dès lors qu'il comprend deux ou plus de deux atomes de carbone.

Dans le cadre de la présente invention, tout acide hydroxyiminoalcanoïque est susceptible de convenir pour autant que le nombre d'atomes de carbone que comprend le groupe alkylène représenté par R soit au moins égal à 2.

Toutefois, on préfère que l'acide hydroxyiminoalcanoïque réponde à la formule générale ci-avant, dans laquelle R représente un groupe alkylène comprenant de 2 à 12 atomes de carbone.

Plus encore, on préfère que l'acide hydroxyiminoalcanoïque réponde à la formule générale ci-avant, dans laquelle R représente un groupe alkylène linéaire comprenant de 3 à 8 atomes de carbone.

De tels acides hydroxyiminoalcanoïques sont :
- l'acide 5-hydroxyiminopentanoïque de formule : O=C(OH)-(CH₂)₃-CH=N-OH ;
- l'acide 6-hydroxyiminohexanoïque de formule : O=C(OH)-(CH₂)₄-CH=N-OH ;
- l'acide 7-hydroxyiminoheptanoïque de formule : O=C(OH)-(CH₂)₅-CH=N-OH ;
- l'acide 8-hydroxyiminooctanoïque de formule : O=C(OH)-(CH₂)₆-CH=N-OH ;
- l'acide 9-hydroxyiminononanoïque de formule : O=C(OH)-(CH₂)₇-CH=N-OH ; et
- l'acide 10-hydroxyiminodécanoïque de formule : O=C(OH)-(CH₂)₈-CH=N-OH.

Parmi ceux-ci, on préfère tout particulièrement l'acide 6-hydroxyiminohexanoïque et l'acide 8-hydroxyiminooctanoïque.

Conformément à l'invention, l'opération de désextraction réductrice du plutonium comprend préférentiellement :
- la mise en contact d'une phase organique, non miscible à l'eau, comprenant un agent extractant et le plutonium au degré d'oxydation IV dans un diluant organique, avec une phase aqueuse comprenant un agent réducteur capable de réduire le plutonium(IV) en plutonium(III) et de l'acide nitrique, l'une des phases organique et aqueuse comprenant de plus l'acide hydroxyiminoalcanoïque ; puis
- la séparation des phases organique et aqueuse ainsi mises en contact.

Conformément à l'invention, l'agent réducteur présent dans la phase aqueuse est, de préférence, choisi parmi l'uranium(IV), le nitrate d'hydroxylammonium, encore appelé nitrate d'hydroxylamine, les dérivés alkylés d'hydroxylamine, le sulfamate ferreux et l'acide sulfamique.

Parmi ces agents réducteurs, on préfère tout particulièrement l'uranium(IV) et le nitrate d'hydroxylammonium, qui sont les deux agents qui sont utilisés pour réduire le plutonium(IV) en plutonium(III) dans le procédé PUREX, le premier dans l'étape de partition U/Pu du premier cycle de décontamination, le deuxième dans le deuxième cycle plutonium.

Par ailleurs, l'agent extractant est, de préférence, un phosphate de tri-n-alkyle et, mieux encore, du TBP tandis que le diluant organique est, de préférence, un dodécane, linéaire ou ramifié comme le n-dodécane ou le TPH, un solvant isoparaffinique comme l'Isane IP185, l'Isane IP165 ou l'Isopar L, ou du kérosène, auquel cas l'agent extractant est préférentiellement présent à hauteur de 30% (v/v) dans ce diluant organique.

Dans tous les cas, l'acide hydroxyiminoalcanoïque est utilisé à une concentration allant, de préférence, de 0,01 mol/L à 3 mol/L et, mieux encore, de 0,03 mol/L à 0,5 mol/L de phase organique ou aqueuse, tandis que l'agent réducteur est, lui, utilisé à une concentration allant, de préférence, de 0,02 mol/L à 0,6 mol/L et, mieux encore, de 0,05 mol/L à 0,4 mol/L de phase aqueuse.

Quant à l'acide nitrique, il est avantageusement présent dans la phase aqueuse à une concentration allant de 0,05 mol/L à 2 mol/L.

Selon une disposition particulièrement préférée de l'invention, l'opération de désextraction réductrice du plutonium est, de préférence, l'une des opérations de désextraction du plutonium du procédé PUREX ou du procédé COEX.

Les acides hydroxyiminoalcanoïques utiles selon l'invention peuvent être obtenus par des procédés de synthèse connus de l'état de la technique.

Ainsi ils peuvent notamment être obtenus :
- par nitrosation/hydrolyse des cycloalcanones correspondantes, par exemple comme décrit dans le brevet français 1 349 281 **[4]** et par Ishigaki et al. (Bull. Chem. Soc. Jap., 1977, 50(3), 726-730 **[5]**) ; ou bien
- par réaction de l'hydroxylamine sur les acides oxoalcanoïques correspondants, par exemple comme décrit par Ayorinde et al. (J. Am. Oil Chem. Soc., 1997, 74(5), 531-538, **[6]**) et par Jackman et al. (J. Org. Chem., 1982, 47(10), 1824-1831, **[7]**), les acides oxoalcanoïques pouvant, eux-mêmes, être obtenus :
   * soit par traitement des acides bromoalcanoïques correspondants par de la potasse, par exemple comme décrit par Thiele et al. (ACS Chem. Biol., 2012, 7(12), 2004-2011, **[8]**), puis oxydation ménagée des acides hydroxyalcanoïques résultant de ce traitement, par exemple comme décrit par Panzer et al. (demande de brevet US 2008/0306153, **[9]**) et par Rajabi et al. (Synth. Comm., 2014, 44(8), 1149-1154, **[10]**) ;
   * soit par irradiation aux micro-ondes des 2-halogénocycloalcanones correspondantes, par exemple comme décrit par Utsukihara et al. (Tet. Lett., 2006, 47(52), 9359-9364, **[11]**), puis oxydation par le periodate de sodium des 2-hydroxycycloalcanones résultant de cette irradiation, par exemple comme décrit par Carrera et al. (Tet. Lett., 2009, 50(38), 5399-5402, **[12]**) ;
   * soit encore, dans le cas de l'acide 6-oxohexanoïque, par oxydation par le periodate de sodium de la 2-hydroxycyclohexanone sous forme de son dimère, par exemple comme décrit par Bouet et al. (Tet. Asym., 2008, 19(20), 2396-2401, **[13]**).

L'invention présente beaucoup d'avantages. En effet, elle offre un éventail d'agents anti-nitreux qui sont capables de bloquer très efficacement la réoxydation du plutonium(III) en plutonium(IV) à la fois en phase aqueuse et en phase organique ainsi que l'oxydation d'un agent réducteur, tel que l'uranium(IV), par l'acide nitreux.

De ce fait, outre que l'invention permet de réaliser des opérations de désextraction réductrice du plutonium sans utilisation d'hydrazine, et ce, qu'il s'agisse d'une opération comme celle qui est mise en œuvre dans l'étape de partition U/Pu du procédé PUREX ou d'une opération comme celle qui est mise en œuvre dans le deuxième cycle plutonium de ce même procédé, elle permet également de réduire très fortement les quantités d'agent réducteur et d'agent anti-nitreux nécessaires à la réalisation de ces opérations par rapport aux quantités requises lorsque l'agent anti-nitreux est l'hydrazine.

L'invention permet donc d'envisager une diminution du nombre de points nécessaires pour l'introduction de ces agents anti-nitreux dans les appareillages dévolus aux opérations de désextraction réductrice du plutonium et donc une simplification de ces appareillages.

De plus, en raison de la présence d'une fonction acide carboxylique dans les molécules des acides hydroxyiminoalcanoïques, la gestion de ces agents anti-nitreux en aval d'une opération de désextraction réductrice du plutonium est simple puisqu'ils sont facilement solubilisés dans une phase aqueuse basique du type de celles qui sont utilisées pour traiter la phase organique issue de la désextraction de l'uranium(VI) en vue de son recyclage dans un schéma typique du procédé PUREX.

D'autres caractéristiques et d'autres avantages de l'invention apparaîtront mieux à la lecture des exemples qui suivent.

Bien entendu, ces exemples ne sont donnés qu'en tant qu'illustrations de l'objet de l'invention et ne constituent en aucun cas une limitation de cet objet.

### BRÈVE DESCRIPTION DES FIGURES

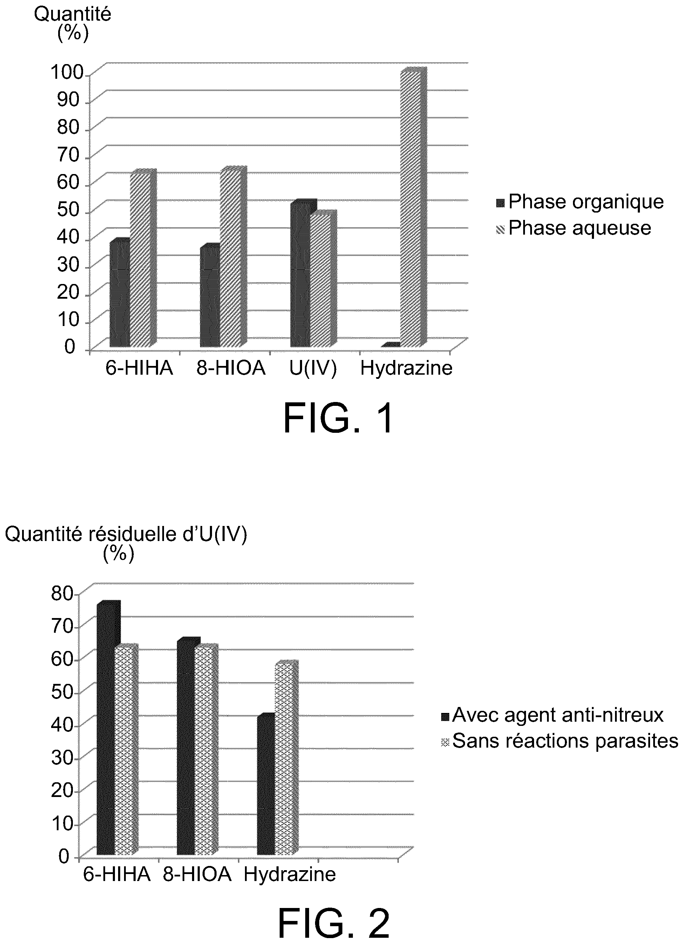

La figure 1 illustre, sous la forme d'un diagramme en bâtons, la distribution de l'acide 6-hydroxyiminohexanoïque (ou 6-HIHA), de l'acide 8-hydroxyiminooctanoïque (ou 8-HIOA), de l'uranium(IV) et de l'hydrazine entre une phase organique comprenant 30% (v/v) de TPB dans du TPH et une phase aqueuse comprenant initialement 1 mol/L d'acide nitrique après mise en contact de ces phases pendant 5 minutes, sous agitation et à température ambiante.
La figure 2 illustre, sous la forme d'un diagramme en bâtons, les quantités résiduelles d'uranium(IV), exprimées en pourcentages des quantités initiales d'uranium(IV), telles qu'obtenues lors d'essais de désextraction réductrice du plutonium ayant été réalisés en utilisant soit de l'acide 6-hydroxyiminohexanoïque soit de l'acide 8-hydroxyiminooctanoïque soit de l'hydrazine comme agent anti-nitreux (bâtons « Avec agent anti-nitreux ») ; à titre de comparaison, sont également indiquées sur cette figure, pour chaque agent anti-nitreux, les quantités résiduelles d'uranium(IV) attendues pour une consommation de l'uranium(IV) qui serait uniquement liée à la réduction du plutonium(IV) en plutonium(III) par cet agent réducteur (bâtons « Sans réactions parasites »).

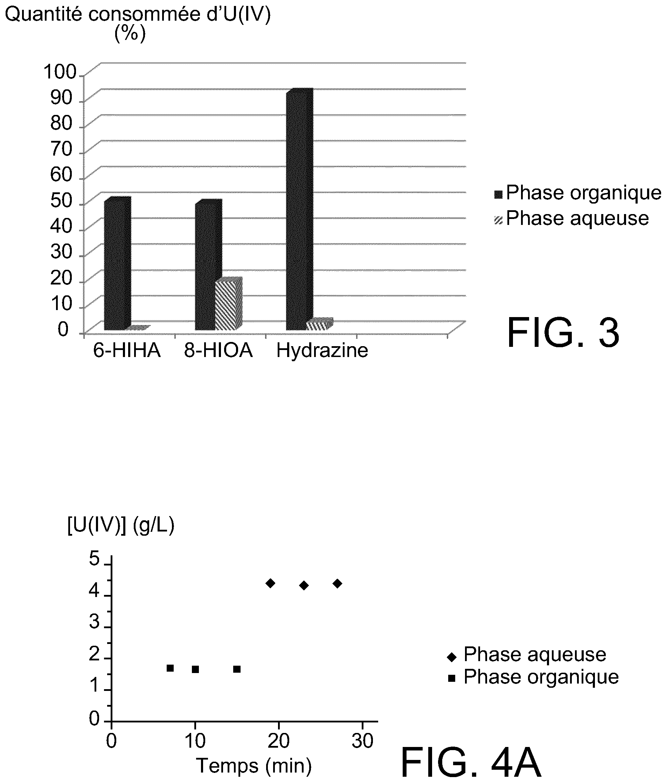

La figure 3 illustre, sous la forme d'un diagramme en bâtons, les quantités d'uranium(IV) consommé en phase organique et en phase aqueuse telles qu'obtenues lors d'essais de désextraction réductrice du plutonium ayant été réalisés en utilisant soit de l'acide 6-hydroxyiminohexanoïque soit de l'acide 8-hydroxyiminooctanoïque soit de l'hydrazine comme agent anti-nitreux, ces quantités étant exprimées en pourcentages des quantités d'uranium(IV) attendues si l'uranium(IV) s'était uniquement distribué entre les deux phases.

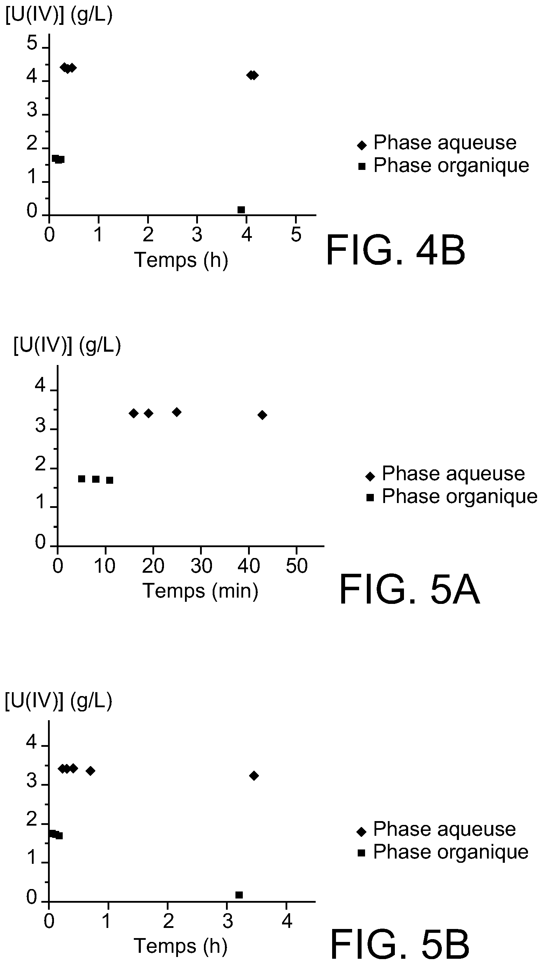

Les figures 4A et 4B illustrent l'évolution dans le temps (exprimé en minutes sur la figure 4A et en heures sur la figure 4B) de la concentration de l'uranium(IV) dans une phase organique et une phase aqueuse résultant d'un essai de désextraction réductrice du plutonium ayant été réalisé en utilisant de l'acide 6-hydroxyiminohexanoïque comme agent anti-nitreux.
Les figures 5A et 5B illustrent l'évolution dans le temps (exprimé en minutes sur la figure 5A et en heures sur la figure 5B) de la concentration de l'uranium(IV) dans une phase organique et une phase aqueuse résultant d'un essai de désextraction réductrice du plutonium ayant été réalisé en utilisant de l'acide 8-hydroxyiminooctanoïque comme agent anti-nitreux.

### EXPOSÉ DÉTAILLÉ DE MODES DE RÉALISATION PARTICULIERS

### EXEMPLE 1: SYNTHÈSE DES ACIDES 6-HYDROXYIMINOHEXANOÏQUE ET 8-HYDROXY-IMINOOCTANOÏQUE

L'acide 6-hydroxyiminohexanoïque (aussi appelé « 6-HIHA » dans ce qui suit) est synthétisé en suivant le schéma réactionnel ci-après : 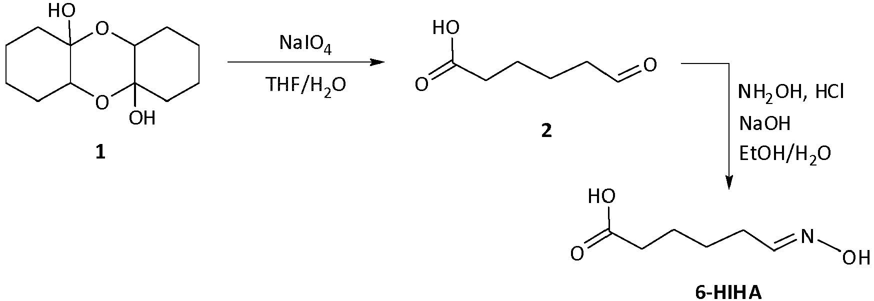 dans lequel la 2-hydroxycyclohexanone, notée **1,** disponible commercialement sous la forme de son dimère (Sigma-Aldrich), est oxydée par le periodate de sodium (1,5 éq.), dans un mélange de tétrahydrofurane et d'eau, pour donner l'acide 6-oxohexanoïque, noté **2,** avec un rendement quasi quantitatif (98%) ; puis, après dissolution dans l'éthanol, l'oxoacide **2** est mis à réagir avec du chlorhydrate d'hydroxylamine (8 éq.), en milieu aqueux et en présence de soude (40°C, ≈ 1 heure), pour donner le 6-HIHA avec un rendement de 60%.

Le rendement global sur les deux étapes est de 58%.

L'acide 8-hydroxyiminooctanoïque (aussi appelé « 8-HIOA » dans ce qui suit) est, lui, synthétisé en suivant le schéma réactionnel ci-après : 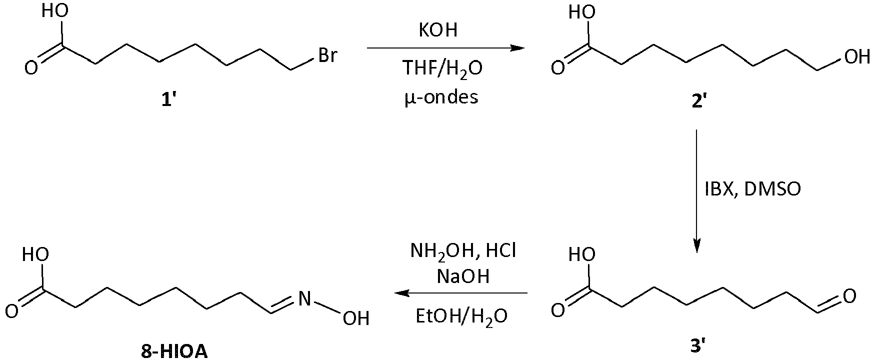 dans lequel l'acide 8-bromooctanoïque, noté **1',** disponible commercialement (Sigma-Aldrich), est traité par de la potasse (2,7 éq.), dans un mélange de tétrahydrofurane et d'eau sous irradiation aux micro-ondes (80°C, 90 W, 5 heures), pour donner l'acide 8-hydroxyoctanoïque, noté **2',** avec un rendement de 76% ; l'hydroxyacide **2'** est ensuite soumis à une oxydation ménagée par l'acide 2-iodobenzoïque (IBX, 1,5 éq.) dans du diméthylsulfoxyde (température ambiante, 4 heures) pour donner l'acide 8-oxooctanoïque, noté **3',** avec un rendement de 73% ; puis, après dissolution dans l'éthanol, l'oxoacide **3'** est mis à réagir avec du chlorhydrate d'hydroxylamine (8 éq.), en présence de soude et en milieu aqueux (65°C, ≈ 1 nuit), pour donner le 8-HIOA avec un rendement de 78%.

Le rendement global sur les trois étapes est de 43%.

### EXEMPLE 2 : PROPRIÉTÉS DES ACIDES 6-HYDROXYIMINOHEXANOÏQUE ET 8-HYDROXY-IMINOOCTANOÏQUE

### 2.1 - Coefficients de distribution

Les coefficients de distribution, notés D, du 6-HIHA et du 8-HIOA sont déterminés à une acidité proche de 0,9 mol/L, cette acidité étant représentative des acidités auxquelles se trouve la majorité du plutonium dans les extracteurs dévolus aux opérations de désextraction réductrice du plutonium du procédé PUREX.

Pour ce faire, on réalise des essais d'extraction en utilisant :
- deux phases organiques comprenant 30% (v/v) de TBP dans du TPH et dans lesquelles ont été solubilisés, pour la première, du 6-HIHA à raison de 0,05 mol/L et, pour la deuxième, du 8-HIOA à raison de 0,01 mol/L; et
- deux phases aqueuses correspondant à deux aliquotes d'une même solution aqueuse d'acide nitrique à 1 mol/L.

Chacune des phases organiques est mise en contact avec l'une des deux phases aqueuses pendant 5 minutes, sous agitation et à température ambiante (22-25°C), dans un rapport volumique O/A (organique/aqueux) de 1,3, puis les phases ainsi mises en contact sont séparées les unes des autres.

On mesure les concentrations du 6-HIHA et du 8-HIOA dans les phases aqueuses (par chromatographie en phase liquide à haute performance) et dans les phases organiques (par chromatographie en phase gazeuse) ainsi que la concentration de l'acide nitrique dans les phases aqueuses (par titrage potentiométrique par NaOH 0,1 M).

On refait le même essai mais en utilisant une phase organique ne comprenant que du TBP (30%, v/v) dans du TPH et une phase aqueuse comprenant 1 mol/L d'acide nitrique et 13 g/L d'uranium(IV) (préalablement dosés par spectrophotométrie visible, λ = 647 nm). Après séparation des phases organique et aqueuse, on mesure la concentration de l'uranium(IV) dans chacune de ces phases (par spectrophotométrie visible) ainsi que la concentration de l'acide nitrique dans la phase aqueuse (par titrage potentiométrique).

L'acidité finale de toutes les phases aqueuses est de 0,9 mol/L d'acide nitrique.

La figure 1 montre les quantités, exprimées en pourcentages, de 6-HIHA, de 8-HIOA et d'uranium(IV) retrouvées respectivement en phase organique et en phase aqueuse.

Sur cette figure, sont également représentées, à titre indicatif, les quantités d'hydrazine retrouvées en phase organique et en phase aqueuse lors d'un essai ayant été réalisé dans des conditions similaires mais en utilisant une phase organique ne comprenant que du TBP (30%, v/v) dans du TPH, une phase aqueuse comprenant 1 mol/L d'acide nitrique et 0,26 mol/L d'hydrazine, dans un rapport volumique O/A de 2.

En tenant compte du rapport volumique O/A utilisé à chaque essai, on obtient les coefficients de distribution suivants :
- D_{6-HIHA} = 0,43 ;
- D_{8-HIOA} = 0,45 ;
- D_{U(IV)} = 0,80 ; et
- D_{Hydrazine} = 0.

Pour permettre une stabilisation de l'uranium(IV) à la fois en phase organique et en phase aqueuse, il convient qu'un agent anti-nitreux, quelle que soit la phase dans laquelle il se trouve initialement, se distribue entre les phases organique et aqueuse comme le fait l'uranium(IV).

Or, comme montré par la figure 1 et par les coefficients de distribution indiqués ci-avant, le 6-HIHA et le 8-HIOA se distribuent équitablement entre phase organique et phase aqueuse, ce qui n'est pas le cas de l'hydrazine qui n'est pas extractible par le TBP.

L'effet « protecteur » des acides hydroxyiminoalcanoïques vis-à-vis de l'oxydation de l'uranium(IV) par l'acide nitreux est donc plus intéressant que celui fourni par l'hydrazine qui, parce qu'elle reste en phase aqueuse, n'est pas capable de détruire l'acide nitreux susceptible d'oxyder l'uranium(IV) en phase organique.

### 2.2 - Stabilisation des actinides par les acides 6-hydroxyiminohexanoïque et 8-hydroxyiminooctanoïque

Afin de vérifier l'aptitude du 6-HIHA et du 8-HIOA à stabiliser l'uranium(IV) et le plutonium(III) dans des conditions chimiques proches de celles dans lesquelles est mise en œuvre l'opération de désextraction réductrice du plutonium du procédé PUREX, on réalise trois essais de désextraction réductrice du plutonium(IV) en partant de quatre phases organiques différentes, à savoir :
- une première phase organique comprenant 30% (v/v) de TBP dans du TPH et 10 g/L de plutonium(IV), ce plutonium ayant été préalablement extrait d'une solution aqueuse d'acide nitrique 1 M (temps de contact : 10 min, sous agitation et à température ambiante) ;
- une deuxième phase organique comprenant 30% (v/v) de TBP dans du TPH et 0,26 mol/L de 6-HIHA ;
- une troisième phase organique comprenant 30% (v/v) de TBP dans du TPH et 0,26 mol/L de 8-HIOA ; et
- une quatrième phase organique ne comprenant que du TBP à hauteur de 30% (v/v) dans du TPH.

Dans le premier essai, un aliquote de la première phase organique est mélangé, volume à volume, pendant 10 secondes et à température ambiante, avec la deuxième phase organique, puis 4 mL du mélange ainsi obtenu est mis en contact pendant 5 minutes, sous agitation et à température ambiante, avec 3 mL d'une première phase aqueuse comprenant 1 mol/L d'acide nitrique et 9 g/L d'uranium(IV). Après quoi, les phases ainsi mises contact sont séparées l'une de l'autre.

Le deuxième essai est réalisé de la même manière que le premier mais en remplaçant la deuxième phase organique par la troisième phase organique.

Quant au troisième essai, il consiste à mélanger un autre aliquote de la première phase organique, volume à volume, pendant 10 secondes et à température ambiante, avec la quatrième phase organique, puis à mettre en contact pendant 5 minutes, sous agitation et à température ambiante, 6 mL du mélange ainsi obtenu avec 3 mL d'une deuxième phase aqueuse comprenant 1 mol/L d'acide nitrique, 13 g/L d'uranium(IV) et 0,26 mol/L d'hydrazine. Après quoi, les phases ainsi mises en contact sont séparées l'une de l'autre.

Ainsi, tous les essais sont effectués dans des conditions initiales identiques en acidité et en concentrations de TBP, de plutonium(IV) et d'uranium(IV), et avec des quantités d'agents anti-nitreux (6-HIHA, 8-HIOA ou hydrazine) équivalentes dans le mélange phase organique/phase aqueuse compte-tenu des rapports de volumes O/A utilisés.

Le temps de contact sous agitation de 5 minutes a été choisi pour être représentatif du temps de séjour maximum dans la partie mélangeur d'un extracteur tel qu'utilisé dans un schéma typique de la partition U/Pu du procédé PUREX.

D'après l'équilibre de réduction du plutonium(IV) en plutonium(III) par l'uranium(IV) indiqué précédemment, une ½ mole d'uranium(IV) est consommée par mole de plutonium(III) produit.

Dans les présents essais, la quantité d'uranium(IV) initialement présente dans les phases aqueuses est environ 1,3-1,4 fois plus élevée que la quantité de plutonium(IV) initialement présente dans les phases organiques. Cet excès d'agent réducteur a été choisi pour permettre une évaluation de la quantité d'uranium(IV) qui est surconsommé, c'est-à-dire dont la consommation vient s'ajouter à celle due uniquement à la réaction de réduction du plutonium(IV).

À l'issue des essais, les concentrations de l'uranium(IV), du plutonium et de l'acide nitrique sont mesurées dans chacune des phases organiques et aqueuses : par spectrophotométrie visible pour l'uranium(IV), par spectrophotométrie α pour le plutonium et par titrage potentiométrique pour l'acide nitrique.

Les résultats de ces mesures montrent qu'après 5 minutes de contact, le plutonium est quantitativement passé en phase aqueuse, au degré d'oxydation III (double pic caractéristique à λ = 560-600 nm), avec un coefficient de distribution extrêmement faible et comparable pour les trois essais (D_{Pu} = 0,02). La réaction de réduction du plutonium(IV) s'est donc bien produite.

La figure 2 présente les quantités résiduelles d'uranium(IV), exprimées en pourcentages des quantités initiales d'uranium(IV), obtenues pour les trois agents anti-nitreux testés (6-HIHA, 8-HIOA et hydrazine) ainsi que les quantités résiduelles d'uranium(IV) attendues pour une consommation de l'uranium(IV) qui serait uniquement liée à la réduction du plutonium(IV) par cet agent réducteur.

Comme le montre cette figure, les quantités d'uranium(IV) consommé en présence de 6-HIHA et de 8-HIOA sont équivalentes, voire plus faibles, que celles attendues par simple réduction du plutonium(IV) en plutonium(III). Par contre, dans le cas de l'hydrazine, une surconsommation d'uranium(IV) est observée dans les mêmes conditions opératoires puisqu'il ne reste que 42% de l'uranium(IV) alors qu'il devrait en rester 58% d'après la stœchiométrie de ladite réaction de réduction.

La figure 3 présente, elle, les quantités d'uranium(IV) consommé en phase organique et en phase aqueuse obtenues pour les trois agents anti-nitreux testés (6-HIHA, 8-HIOA et hydrazine) et rapportées en pourcentages des quantités d'uranium(IV) attendues si l'uranium(IV) s'était uniquement distribué entre les deux phases.

Elle montre que, comme attendu, l'uranium(IV) est majoritairement consommé en phase organique du fait que la réduction du plutonium(IV), qui est initialement présent en phase organique, se produit dans cette phase. Elle montre aussi que l'uranium(IV) est moins consommé en présence de 6-HIHA ou de 8-HIOA qu'il ne l'est en présence d'hydrazine, confirmant ainsi le fait que les acides hydroxyiminoalcanoïques ont un pouvoir anti-nitreux supérieur à celui de l'hydrazine.

En présence d'hydrazine, l'uranium(IV) est quasiment deux fois plus consommé en phase organique qu'il ne l'est en présence de 6-HIHA ou de 8-HIOA puisque, contrairement à ces derniers, l'hydrazine n'est pas extractible en phase organique. Par contre, l'uranium(IV) est peu consommé en phase aqueuse.

En présence de 6-HIHA ou de 8-HIOA, l'uranium(IV) est consommé en phase organique normalement, c'est-à-dire en quantité nécessaire pour permettre la réduction du plutonium. En phase aqueuse, le 6-HIHA semble aussi efficace, voire plus, que l'hydrazine pour stabiliser l'uranium(IV) puisqu'il n'y a pas de consommation de cet agent réducteur en présence de cet agent anti-nitreux.

Les conditions opératoires dans lesquelles ont été réalisés les essais décrits ci-avant ainsi que les résultats obtenus lors de ces essais sont réunis dans le tableau I ci-après.

**Tableau I**

| **Agent anti-nitreux** | **6-HIHA** | **8-HIOA** | **Hydrazine** |
|---|---|---|---|
| **Conditions initiales** | | | |
| Rapport volumique O/A | 1,3 | 1,3 | 2 |
| Rapport massique U(IV) en phase aqueuse/Pu(IV) en phase organique | 1,4 | 1,4 | 1,3 |
| [U(IV)] en phase aqueuse (g/L) | 8,9 | 8,9 | 12,6 |
| [U(IV)] en phase aqueuse (mol/L) | 0,037 | 0,037 | 0,053 |
| [HNO₃] en phase aqueuse (mol/L) | 1,0 | 1,0 | 1,0 |
| [Pu(IV)] en phase organique (g/L) | 4,6 | 4,6 | 4,9 |
| [agent anti-nitreux] en phase organique (mol/L) | 0,13 | 0,13 | --- |
| [agent anti-nitreux] en phase aqueuse (mol/L) | --- | --- | 0,26 |
| D_{agent anti-nitreux} | 0,45 | 0,43 | 0 |
| D_{U(IV)} | 0,8 | 0,8 | 0,8 |

| **Phase aqueuse après contact (5 min)** | | | |
|---|---|---|---|
| [agent anti-nitreux] estimée sans consommation (mol/L) | 0,11 | 0,11 | 0,26 |
| [U(IV)] estimée sans consommation (mol/L) | 0,018 | 0,018 | 0,020 |
| Quantité d'agent anti-nitreux estimée sans consommation | 63% | 64% | 100% |
| Quantité d'U(IV) estimée sans consommation | 48% | 48% | 38% |
| [U(IV)] estimée sans consommation (g/L) | 4,3 | 4,3 | 4,8 |
| [U(IV)] mesurée (g/L) | 4,4 | 3,5 | 4,7 |
| Quantité d'U(IV) consommé en phase aqueuse | 0% | 19% | 3% |
| [U(IV)] mesurée (mol/L) | 0,019 | 0,015 | 0,020 |
| [Pu] mesurée (g/L) | 6,6 | 6,6 | 11 |
| [Pu] mesurée (mol/L) | 0,028 | 0,027 | 0,045 |
| [HNO₃] mesurée (mol/L) | 0,90 | 0,82 | 0,99 |
| Volume aqueux (mL) | 3 | 3 | 3 |

| **Phase organique après contact (5 min)** | | | |
|---|---|---|---|
| [agent anti-nitreux] estimée sans consommation (mol/L) | 0,049 | 0,047 | 0 |
| [U(IV)] estimée sans consommation (mol/L) | 0,014 | 0,14 | 0,016 |
| Quantité d'agent anti-nitreux estimée sans consommation | 38% | 36% | 0% |
| Quantité d'U(IV) estimée sans consommation | 52% | 52% | 62% |
| [U(IV)] estimée sans consommation (g/L) | 3,4 | 3,4 | 3,9 |
| [U(IV)] mesurée (g/L) | 1,70 | 1,74 | 0,3 |
| Quantité d'U(IV) consommée en phase organique | 50% | 49% | 92% |
| [Pu] mesurée (g/L) | 0,11 | 0,09 | 0,23 |
| Volume organique (mL) | 4 | 4 | 6 |
| D_{Pu} | 0,017 | 0,014 | 0,021 |
| Bilan Pu | 110% | 108% | 113% |
| Bilan U(IV) résiduel | 76% | 65% | 42% |
| Bilan U(IV) résiduel sans réactions parasites | 63% | 63% | 58% |

### 2.3 - Vieillissement des phases organiques et aqueuses une fois séparées

Afin d'évaluer s'il existe, avec les acides hydroxyiminoalcanoïques, un risque d'oxydation de l'uranium(IV) en uranium(VI) et de réoxydation du plutonium(III) dans l'ensemble des étages dévolus à la partition U/Pu dans un schéma typique du procédé PUREX, la concentration de l'uranium(IV) dans les phases organiques et aqueuses obtenues à l'issue des essais de désextraction ayant été réalisés au point 2.2 ci-avant, en utilisant le 6-HIHA et le 8-HIOA comme agents anti-nitreux, est suivie, par spectrophotométrie visible, pendant plusieurs heures après leur séparation les unes des autres.

D'après les débits O/A classiquement mis en œuvre dans un schéma industriel ou un schéma d'essai pilote du procédé PUREX, le temps de séjour de la phase aqueuse dans les extracteurs dans lesquels se déroulent les opérations classiquement dénommées « Désextraction Pu » et « Lavage U » de la partition U/Pu ne dépasse pas quatre heures tandis qu'il est au maximum de deux heures pour la phase organique. Le suivi des concentrations est donc réalisé sur une durée de 3 à 4 heures.

Les résultats sont illustrés sur les figures 4A et 4B pour le 6-HIHA et sur les figures 5A et 5B pour le 8-HIOA, les figures 4A et 5A correspondant aux concentrations de l'uranium(IV) mesurées sur les 30 premières minutes suivant la séparation des phases organiques et aqueuses et les figures 4B et 5B correspondant aux concentrations de l'uranium(IV) mesurées sur l'ensemble de la durée de suivi.

Comme le montrent ces figures, la concentration de l'uranium(IV), mélangé à l'ensemble du plutonium(III) en phase aqueuse, est stable : il n'y a donc pas de risque de réoxydation du plutonium(III) ni d'oxydation de l'uranium(IV) en phase aqueuse. En phase organique contenant l'essentiel de l'acide nitreux, même si la concentration d'uranium(IV) diminue plus, la stabilité reste compatible avec des temps de séjour globaux inférieurs à deux heures puisqu'il reste de l'uranium(IV) après 3 heures de vieillissement.

Ceci signifie que le 6-HIHA et le 8-HIOA stabilisent suffisamment l'uranium(IV) vis-à-vis de sa réoxydation par l'acide nitreux en phases organique et aqueuse pour le maintenir en quantité suffisante même après un vieillissement de plusieurs heures.

Dans tous les cas, le plutonium est resté au degré d'oxydation III pendant ces quelques heures de vieillissement, ce qui est l'objectif recherché pour une désextraction efficace de cet actinide d'une phase organique constituée de TBP dans du TPH vers une phase aqueuse nitrique.

### 2.4 - Gestion des acides 6-hydroxyiminohexanoïque et 8-hydroxyiminooctanoïque en aval d'une opération de désextraction réductrice du plutonium

Comme le montre le tableau I, la majorité du 6-HIHA et du 8-HIHA se trouve, après une désextraction réductrice du plutonium, essentiellement en phase aqueuse. Seule une faible proportion de ces agents anti-nitreux reste dans la phase organique.

Dans un schéma typique du procédé PUREX, l'opération qui est située en aval de l'opération de désextraction réductrice du plutonium dans l'étape de partition U/Pu permet de désextraire l'uranium(VI) de la phase organique issue de cette opération de désextraction vers une phase aqueuse qui comprend de 0,01 mol/L à 0,05 mol/L d'acide nitrique (rapport de débits O/A proche de 1, température à 45°C). La phase organique ainsi épurée en plutonium et uranium est ensuite traitée, en vue de son recyclage, par une solution aqueuse comprenant 0,3 mol/L de carbonate de sodium, puis par une solution aqueuse comprenant 0,1 mol/L d'hydroxyde de sodium (rapports de débits O/A de 10-20, température de 45°C).

Des essais de désextraction sont donc réalisés en utilisant :
- comme phases organiques, deux phases comprenant du TBP à 30% (v/v) dans du TPH ainsi que 0,05 mol/L de 6-HIHA pour la première et 0,05 mol/l de 8-HIOA pour la deuxième ; et
- comme phases aqueuses, des solutions aqueuses mimant en termes d'acidité ou de basicité celles respectivement utilisées, dans un schéma typique du procédé PUREX, pour désextraire l'uranium(VI) et régénérer la phase organique en vue de son recyclage.

Ces essais sont réalisés à température ambiante, en utilisant un rapport volumique O/A de 1 et un temps de contact entre les phases organique et aqueuse de 2 minutes sous agitation.

Des mesures de la concentration du 6-HIHA et du 8-HIOA dans les phases aqueuses (par chromatographie en phase liquide à haute performance) et dans les phases organiques (par chromatographie en phase gazeuse) obtenues à l'issue de ces essais montrent que les coefficients de distribution du 6-HIHA et 8-HIOA sont quasi constants pour des acidités comprises entre 0,01 mol/L et 0,05 mol/L. Par contre, elles montrent également que le 6-HIHA et le 8-HIOA passent quantitativement en phase aqueuse après une seule mise en contact avec une solution d'hydroxyde de sodium si la quantité de base présente dans cette solution est suffisante pour neutraliser la fraction de ces composés se trouvant en phase organique.

Ces agents anti-nitreux peuvent donc être aisément éliminés de la phase organique issue de la désextraction de l'uranium(VI) par le traitement basique auquel cette phase organique est soumise, dans un schéma typique du procédé PUREX, pour son recyclage.

### RÉFÉRENCES CITÉES

**[1]** WO-A-2006/072729
**[2]** WO-A-2011/000844
**[3]** WO-A-2008/148863
**[4]** FR-B-1 349 281
**[5]** Ishigaki et al., Bull. Chem. Soc. Jap., 1977, 50(3), 726-730
**[6]** Ayorinde et al., J. Am. Oil Chem. Soc., 1997, 74(5), 531-538
**[7]** Jackman et al., J. Org. Chem., 1982, 47(10), 1824-1831
**[8]** Thiele et al., ACS Chem. Biol., 2012, 7(12), 2004-2011
**[9]** US-A-2008/0306153
**[10]** Rajabi et al., Synth. Comm., 2014, 44(8), 1149-1154
**[11]** Utsukihara et al., Tet. Lett., 2006, 47(52), 9359-9364
**[12]** Carrera et al., Tet. Lett., 2009, 50(38), 5399-5402
**[13]** Bouet et al., Tet. Asym., 2008, 19(20), 2396-2401

## Revendications

1. Utilisation d'au moins un acide hydroxyiminoalcanoïque de formule générale O=C(OH)-(R)-CH=N-OH dans laquelle R représente un groupe alkylène, linéaire ou ramifié, comprenant au moins 2 atomes de carbone, en tant qu'agent anti-nitreux dans une opération de désextraction réductrice du plutonium.

2. Utilisation selon la revendication 1, dans laquelle R représente un groupe alkylène comprenant de 2 à 12 atomes de carbone.

3. Utilisation selon la revendication 2, dans laquelle R représente un groupe alkylène linéaire comprenant de 3 à 8 atomes de carbone.

4. Utilisation selon la revendication 3, dans laquelle l'acide hydroxyiminoalcanoïque est l'acide 6-hydroxyiminohexanoïque ou l'acide 8-hydroxyiminooctanoïque.

5. Utilisation selon l'une quelconque des revendications 1 à 4, dans laquelle l'opération de désextraction réductrice du plutonium comprend :
- la mise en contact d'une phase organique, non miscible à l'eau, comprenant un agent extractant et le plutonium au degré d'oxydation IV dans un diluant organique, avec une phase aqueuse comprenant un agent réducteur capable de réduire le plutonium(IV) en plutonium(III) et de l'acide nitrique, l'une des phases organique et aqueuse comprenant de plus l'acide hydroxyiminoalcanoïque ; puis
- la séparation des phases organique et aqueuse ainsi mises en contact.

6. Utilisation selon la revendication 5, dans laquelle l'agent extractant est un phosphate de tri-*n*-alkyle, de préférence le phosphate de tri-*n*-butyle.

7. Utilisation selon la revendication 5 ou la revendication 6, dans laquelle l'agent réducteur est l'uranium(IV), le nitrate d'hydroxylammonium, les dérivés alkylés d'hydroxylamine, le sulfamate ferreux ou l'acide sulfamique.

8. Utilisation selon la revendication 7, dans laquelle l'agent réducteur est l'uranium(IV) ou le nitrate d'hydroxylammonium.

9. Utilisation selon l'une quelconque des revendications 5 à 8, dans laquelle l'agent réducteur est utilisé à une concentration allant de 0,02 mol/L à 0,6 mol/L, de préférence de 0,05 mol/L à 0,4 mol/L, de phase aqueuse.

10. Utilisation selon l'une quelconque des revendications 1 à 9, dans laquelle l'acide hydroxyiminoalcanoïque est utilisé à une concentration allant de 0,01 mol/L à 3 mol/L, de préférence de 0,03 mol/L à 0,5 mol/L, de phase organique ou aqueuse.

11. Utilisation selon l'une quelconque des revendications 1 à 10, dans laquelle l'opération de désextraction réductrice du plutonium est l'une des opérations de désextraction du plutonium d'un procédé PUREX ou d'un procédé COEX.

## Patentansprüche

1. Verwendung wenigstens einer Hydroxyiminoalkansäure der allgemeinen Formel O=C(OH)-(R)-CH=N-OH, wobei R eine lineare oder verzweigte Alkylengruppe mit wenigstens zwei Kohlenstoffatomen repräsentiert, als Antisalpetermittel in einer reduzierenden Rückextraktionsoperation von Plutonium.

2. Verwendung nach Anspruch 1, wobei R eine Alkylengruppe mit 2 bis 12 Kohlenstoffatomen repräsentiert.

3. Verwendung nach Anspruch 2, wobei R eine lineare Alkylengruppe mit 3 bis 8 Kohlenstoffatomen repräsentiert.

4. Verwendung nach Anspruch 3, wobei die Hydroxyiminoalkansäure die 6-Hydroxyiminohexansäure oder die 8-Hydroxyiminooktansäure ist.

5. Verwendung nach einem der Ansprüche 1 bis 4, wobei die reduzierende Rückextraktionsoperation von Plutonium Folgendes umfasst:
- das Inkontaktbringen einer mit Wasser nicht mischbaren organischen Phase, umfassend ein Extraktionsmittel und das Plutonium im Oxidationsgrad IV in einem organischen Verdünner, mit einer wässrigen Phase, umfassend ein Reduktionsmittel, das dazu ausgelegt ist, das Plutonium (IV) in Plutonium (III) zu reduzieren, und Salpetersäure, wobei eine der organischen und wässrigen Phasen ferner die Hydroxyiminoalkansäure umfasst; und dann
- die Separierung der derart in Kontakt gebrachten organischen und wässrigen Phase.

6. Verwendung nach Anspruch 5, wobei das Extraktionsmittel ein Phosphat von Tri-*n*-Alkyl ist, vorzugsweise das Phosphat von Tri-*n*-Butyl.

7. Verwendung nach Anspruch 5 oder Anspruch 6, wobei das Reduktionsmittel Uran (IV), das Nitrat von Hydroxylamonium, die alkylierten Derivate von Hydroxylamin, Eisensulfamat oder Sulfaminsäure ist.

8. Verwendung nach Anspruch 7, wobei das Reduktionsmittel Uran (IV) oder das Nitrat von Hydroxylamonium ist.

9. Verwendung nach einem der Ansprüche 5 bis 8, wobei das Reduktionsmittel mit einer Konzentration verwendet wird, die von 0,02 mol/L bis 0,6 mol/L, vorzugsweise von 0,05 mol/L bis 0,4 mol/L der wässrigen Phase geht.

10. Verwendung nach einem der Ansprüche 1 bis 9, wobei die Hydroxyiminoalkansäure mit einer Konzentration verwendet wird, die von 0,01 mol/L bis 3 mol/L, vorzugsweise von 0,03 mol/L bis 0,5 mol/L der organischen oder wässrigen Phase geht.

11. Verwendung nach einem der Ansprüche 1 bis 10, wobei die reduzierende Rückextraktionsoperation von Plutonium eine der Rückextraktionsoperationen von Plutonium eines PUREX-Verfahrens oder eines COEX-Verfahrens ist.

## Claims

1. Use of at least one hydroxyiminoalkanoic acid of general formula O=C(OH)-(R)-CH=N-OH where R is a straight-chain or branched alkylene group having at least 2 carbon atoms, as anti-nitrous agent in a reductive stripping operation of plutonium.

2. Use according to claim 1, wherein R is an alkylene group having 2 to 12 carbon atoms.

3. Use according to claim 2, wherein R is a straight-chain alkylene group having 3 to 8 carbon atoms.

4. Use according to claim 3, wherein the hydroxyiminoalkanoic acid is 6-hydroxyiminohexanoic acid or 8-hydroxyiminooctanoic acid.

5. Use according to any of claims 1 to 4, wherein the reductive stripping operation of plutonium comprises:
- contacting an organic non-water-miscible phase comprising an extracting agent and plutonium at oxidation state IV in an organic diluent, with an aqueous phase comprising a reducing agent capable of reducing plutonium(IV) to plutonium(III) and nitric acid, one of the organic and aqueous phases additionally comprising the hydroxyiminoalkanoic acid; then
- separating the so contacted organic and aqueous phases.

6. Use according to claim 5, wherein the extracting agent is a tri-n-alkyl phosphate, preferably tri-n-butyl phosphate.

7. Use according to claim 5 or claim 6, wherein the reducing agent is uranium(IV), hydroxylammonium nitrate, alkylated derivatives of hydroxylamine, ferrous sulfamate or sulfamic acid.

8. Use according to claim 7, wherein the reducing agent is uranium(IV) or hydroxylammonium nitrate.

9. Use according to any of claims 5 to 8, wherein the reducing agent is used at a concentration ranging from 0.02 mol/L to 0.6 mol/L, preferably from 0.05 mol/L to 0.4 mol/L, of aqueous phase.

10. Use according to any of claims 1 to 9, wherein the hydroxyiminoalkanoic acid is used at a concentration ranging from 0.01 mol/L to 3 mol/L, preferably from 0.03 mol/L to 0.5 mol/L, of organic or aqueous phase.

11. Use according to any of claims 1 to 10, wherein the reductive stripping operation of plutonium is one of the plutonium stripping operations of a PUREX method or COEX method.
